# EUROPEAN PATENT APPLICATION

(11) **EP 4 579 857 A1**
(43) Date of publication of application: **02.07.2025**
(21) Application number: 23917101.0
(22) Date of filing: 18.10.2023
(51) Int. Cl.: H01M 10/0569, H01M 10/054

(54) **ELECTROLYTE FOR SODIUM SECONDARY BATTERY, SODIUM SECONDARY BATTERY, AND ELECTRICAL DEVICE**

(30) Priority: 16.01.2023 CN 202310075561
(71) Applicant: Contemporary Amperex Technology (Hong Kong) Limited, Central (HK)
(72) Inventor: CHEN, Shigang, Ningde, Fujian 352100 (CN); GUO, Bingkun, Ningde, Fujian 352100 (CN); ZHANG, Xinxin, Ningde, Fujian 352100 (CN); LI, Xiaolong, Ningde, Fujian 352100 (CN); LIU, Ben, Ningde, Fujian 352100 (CN); YAO, Shikang, Ningde, Fujian 352100 (CN)
(74) Representative: Jacob, Reuben Ellis
(86) International application number: PCT/CN2023/125241
(87) International publication number: WO 2024/152633

(57) **Abstract**

An electrolyte for a sodium secondary battery, a sodium secondary battery, a battery module, and an electrical device. The electrolyte for the sodium secondary battery comprises a sodium salt, an ether solvent, and a fluoroether solvent. The electrolyte contains ether solvent molecules and fluoroether solvent molecules that form a co-solvated structure with sodium ions, so that the chemical and electrochemical stability of the ether solvent is improved, and the cycle performance, storage performance and safety of the fluoroether solvent are improved.

## Description

### CROSS-REFERENCE TO RELATED APPLICATIONS

This application refers to Chinese Patent Application No. 202310075561.7, filed on January 16, 2023 and entitled "ELECTROLYTE FOR SODIUM SECONDARY BATTERY, SODIUM SECONDARY BATTERY, AND ELECTRIC APPARATUS".

### TECHNICAL FIELD

This application relates to the field of secondary battery technologies, and in particular, to an electrolyte for sodium secondary battery, a sodium secondary battery, a battery module, and an electric apparatus.

### BACKGROUND

With the increasing demand for large-scale energy storage batteries, sodium secondary batteries have attracted much attention due to their advantages such as abundant raw material sources, low costs, and similar operating mechanisms to lithium-ion batteries.

As an important part of a secondary battery, an electrolyte plays a crucial role in rate performance, safety, cycle life, and the like of the battery. However, due to its high reducibility, sodium metal undergoes side reactions with organic solvents in the electrolyte and produces harmful gases, thus adversely affecting the cycling performance, storage performance, safety, and the like of the battery. Therefore, it is necessary to develop a chemically and electrochemically stable electrolyte, so as to effectively improve the performance of sodium secondary batteries.

### SUMMARY

This application has been made in view of the above issues, with an objective to provide an electrolyte for sodium secondary battery. Through a co-solvation structure formed by ether solvent molecules and fluoroether solvent molecules in the electrolyte and sodium ions, the electrochemical stability of an ether solvent is improved, and the cycling performance, storage performance, and safety of a battery with a fluoroether solvent are improved.

According to a first aspect of this application, an electrolyte for sodium secondary battery is provided, including a sodium salt, an ether solvent, and a fluoroether solvent.

The fluoroether solvent has a high absolute value of a highest occupied molecular orbital (HOMO). The fluoroether solvent and the ether solvent added together in the electrolyte can broaden an electrochemical stability window of the electrolyte with the ether solvent, thereby enhancing the tolerance of the electrolyte to a high operating potential at a positive electrode, improving the thermal stability of the fluoroether solvent, and reducing the problems of high reactivity of the fluoroether solvent, a large amount of gas produced at a metal negative electrode, and poor cycling stability.

In any embodiment, a first solvation shell of the sodium salt includes ether solvent molecules and fluoroether solvent molecules.

The fluoroether solvent in the electrolyte of this application is not an inert fluoroether solvent with high steric hindrance, but participates in forming the first solvation shell together with the ether solvent molecules in the electrolyte. The fluoroether solvent and the ether solvent used together can effectively broaden the electrochemical stability window of the electrolyte with the ether solvent, thereby enhancing the tolerance of the electrolyte to the high operating potential at the positive electrode, improving the thermal stability of the fluoroether solvent, and reducing the problems of high reactivity of the fluoroether solvent, the large amount of gas produced at the metal negative electrode, and poor cycling stability.

In any embodiment, the ether solvent includes a compound represented by formula I, a compound represented by formula II, or a crown ether, 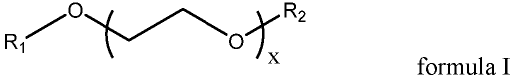 and 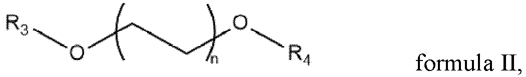 where R₁, R₂, R₃, and R₄ are each independently selected from hydrogen and unsubstituted C₁-C₆ alkyl; R₁ and R₂ optionally form a cyclic structure together with oxygen connected thereto; x is an arbitrary integer from 0 to 5; R₃ and R₄ optionally form a cyclic structure together with oxygen connected thereto; and n is an arbitrary integer from 1 to 5.

In any embodiment, the ether solvent includes one or more of ethylene glycol dimethyl ether, diethylene glycol dimethyl ether, triethylene glycol dimethyl ether, tetraethylene glycol dimethyl ether, ethylene glycol diethyl ether, diethylene glycol diethyl ether, diisopropyl ether, dibutyl ether, diethylene glycol dibutyl ether, 1,4-dimethoxybutane, 1,4-diethoxybutane, 1,3-dioxolane, tetrahydrofuran, 15-crown-5, 12-crown-4, and 18-crown-6; and optionally, the ether solvent includes one or more of ethylene glycol dimethyl ether, ethylene glycol diethyl ether, and 1,3-dioxolane.

The ether solvent molecules in the co-solvation structure can reduce the contact between the fluoroether solvent molecules and sodium metal at an electrode/electrolyte double layer interface, preventing the sodium metal from undergoing direct chemical reactions with the electrolyte, thereby ensuring that the electrolyte can withstand a high voltage and enhancing the chemical stability of the fluoroether solvent molecules to the sodium metal. In addition, the ether solvent is introduced into the fluoroether solvent, so that the solubility of the sodium salt in the electrolyte is increased, and the electrolyte can have a high concentration.

In any embodiment, the fluoroether solvent includes a compound represented by formula III, 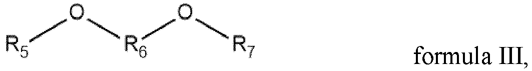 where R₅, R₆, and R₇ are each independently selected from hydrogen, unsubstituted C₁-C₆ alkyl, or C₁-C₆ alkyl substituted with fluorine or hydroxyl; at least one of R₅, R₆, and R₇ includes fluorine; and R₅ and R₇ optionally form a cyclic structure together with oxygen connected thereto and R₆ connected to oxygen.

In any embodiment, the fluoroether solvent includes one or more selected from 2,2,3,3-tetrafluoro-1,4-dimethoxybutane, 2-(2-ethoxyethoxy)-1,1,1-trifluoroethane, 1,2-bis(2,2-difluoroethoxy)ethane, 2-(2-(2,2-difluoroethoxy)ethoxy)-1,1,1-trifluoroethane, 1,2-bis(2,2,2-trifluoroethoxy)ethane, 1,1,1,3,3,3-hexafluoroisopropyl methyl ether, 2,2,2-trifluoroethyl methyl ether-1,1,2,3,3,3-hexafluoropropyl ether, 2,2-bis(trifluoromethyl)-1,3-dioxolane, 2,2-dimethoxy-4-(trifluoromethyl)-1,3-dioxolane, 2-ethoxy-4-(trifluoromethyl)-1,3-dioxolane, and perfluorotetrahydrofuran; and optionally, the fluoroether solvent includes one or more of 2,2,3,3-tetrafluoro-1,4-dimethoxybutane, 2-(2-ethoxyethoxy)-1,1,1-trifluoroethane, 1,2-bis(2,2,2-trifluoroethoxy)ethane, 2,2-bis(trifluoromethyl)-1,3-dioxolane, and 2,2-dimethoxy-4-(trifluoromethyl)-1,3-dioxolane.

The fluoroether solvent has a higher absolute value of a highest occupied molecular orbital (HOMO), thereby broadening an electrochemical stability window of a corresponding electrolyte after an electrolytic salt is dissolved, enhancing the electrochemical stability of the electrolyte, allowing the electrolyte to be collocated with a positive electrode active material with a higher potential, and increasing the operating voltage of the secondary battery.

In any embodiment, based on a total volume of the electrolyte, a volume ratio of the ether solvent to the fluoroether solvent is 1:9 to 9:1, optionally 1:1 to 9:1 or 3:2 to 4:1.

When based on the total volume of the electrolyte, the volume ratio of the ether solvent to the fluoroether solvent is 1:9 to 9:1, the ether solvent molecules can form a cosolvent structure with the fluoroether solvent molecules and cations, thereby enhancing the tolerance of the ether solvent to a high voltage at the positive electrode, and improving the cycling stability and storage stability of a battery with the fluoroether solvent.

When based on the total volume of the electrolyte, the volume ratio of the ether solvent to the fluoroether solvent is 1:1 to 9:1, the fluoroether solvent added enhances the electrochemical window stability of the ether solvent and can also improve the cycling performance of a battery with the ether solvent, reduce the amount of gas produced in the battery, and improve the storage performance of the battery.

When based on the total volume of the electrolyte, the volume ratio of the ether solvent to the fluoroether solvent is 3:2 to 4:1, the battery with the ether solvent has further improved cycling performance and further reduced amount of gas produced.

In any embodiment, the electrolyte includes a sodium salt, where the sodium salt includes one or more of sodium nitrate, sodium perchlorate, sodium hexafluorophosphate, sodium tetrafluoroborate, sodium tetrafluoroyttrate, sodium hexafluoroarsenate, sodium acetate, sodium trifluoroacetate, sodium bis(oxalato)borate, sodium difluoro(oxalato)borate, sodium tetraphenylborate, sodium trifluoromethanesulfonate, sodium bis(fluorosulfonyl)imide, sodium bis(trifluoromethanesulfonyl)imide, and sodium (perfluorobutylsulfonyl)imide.

The electrolyte provided in this application is suitable for different types of sodium salts. Different types of sodium salts can cooperate with the electrolyte of this application to improve the first solvation shell, thereby improving the cycling performance of the battery and reducing the amount of gas produced in the battery.

In any embodiment, based on a total mass of the electrolyte, a mass percentage of the sodium salt is 2% to 70%, optionally 30% to 70%.

When based on the total mass of the electrolyte, the mass percentage of the sodium salt is 2% to 70%, the electrolyte provided in this application can effectively broaden the electrochemical stability window of the electrolyte with the ether solvent, thereby enhancing the tolerance of the electrolyte to the high operating potential at the positive electrode, improving the thermal stability of the fluoroether solvent, and reducing the problems of high reactivity of the fluoroether solvent, the large amount of gas produced at the metal negative electrode, and poor cycling stability.

When based on the total mass of the electrolyte, the mass percentage of the sodium salt is 30% to 70%, the electrolyte of this application and the sodium salt with a high concentration further form a synergistic effect, further improving the cycling performance, storage performance, and high-temperature performance of the battery based on high cycling performance of the battery due to the high concentration.

According to a second aspect of this application, a sodium secondary battery is provided, including the electrolyte according to the first aspect.

In any embodiment, the sodium secondary battery is a sodium metal battery.

In any embodiment, the sodium secondary battery is a sodium secondary battery with no negative electrode.

In any embodiment, the sodium secondary battery includes a positive electrode plate, where the positive electrode plate includes a positive electrode active material, and the positive electrode active material includes one or more of a Prussian blue compound, a polyanionic compound, and a layered oxide.

In any embodiment, a surface of a particle of the positive electrode active material is provided with a coating layer, where the coating layer includes one or more of a carbon material, polyaniline, polypyrrole, poly(3,4-ethylenedioxythiophene), aluminum oxide, zinc oxide, titanium oxide, zirconium oxide, magnesium oxide, silicon oxide, lanthanum oxide, sodium fluoride, lithium fluoride, and aluminum fluoride. The carbon material is selected from one or more of amorphous carbon, graphite, and graphene.

The coating layer on the surface of the particle of the positive electrode active material can avoid side reactions caused by direct contact between a surface of a positive electrode metal and the electrolyte, suppress dissolution of positive electrode transition metals, and enhance the electrode/electrolyte interface stability.

In any embodiment, a thickness of the coating layer is 2 nm to 1000 nm, optionally 10 nm to 100 nm.

In any embodiment, the sodium secondary battery includes a negative electrode plate, where the negative electrode plate includes a negative electrode current collector and a primer layer provided on at least one side of the negative electrode current collector, and the primer layer includes one or more of carbon nanotubes, graphite, graphene, silver-carbon composite nanoparticles, and tin-carbon composite nanoparticles.

In any embodiment, the negative electrode current collector includes at least one of a metal foil, a metal foam current collector, a metal mesh current collector, a carbon felt current collector, a carbon cloth current collector, a carbon paper current collector, and a composite current collector.

In any embodiment, a surface density of the primer layer is 2 g/m² to 50 g/m².

In any embodiment, a thickness of the primer layer is 1 µm to 100 µm.

According to a third aspect of this application, a battery module is provided, including the sodium secondary battery according to the second aspect.

According to a fourth aspect of this application, a battery pack is provided, including the sodium secondary battery according to the second aspect or the battery module according to the third aspect.

According to a fifth aspect of this application, an electric apparatus is provided, including at least one of the sodium secondary battery according to the second aspect, the battery module according to the third aspect, or the battery pack according to the fourth aspect.

### BRIEF DESCRIPTION OF DRAWINGS

FIG. 1 is a schematic diagram of a secondary battery according to an embodiment of this application;
FIG. 2 is an exploded view of the secondary battery according to the embodiment of this application in FIG. 1;
FIG. 3 is a schematic diagram of a battery module according to an embodiment of this application;
FIG. 4 is a schematic diagram of a battery pack according to an embodiment of this application;
FIG. 5 is an exploded view of the battery pack according to the embodiment of this application in FIG. 4; and
FIG. 6 is a schematic diagram of an electric apparatus using a secondary battery as a power source according to an embodiment of this application.

### Description of reference signs:

1. battery pack; 2. upper box body; 3. lower box body; 4. battery module; 5. secondary battery; 51. housing; 52. electrode assembly; and 53. cover plate.

### DESCRIPTION OF EMBODIMENTS

Embodiments that specifically disclose an electrolyte for sodium secondary battery, a sodium secondary battery, a battery module, a battery pack, and an electric apparatus in this application are described in detail below with reference to the accompanying drawings as appropriate. However, there may be cases where unnecessary detailed descriptions are omitted. For example, detailed descriptions of well-known matters and repeated descriptions of actually identical structures have been omitted. This is to avoid unnecessarily prolonging the following description, for ease of understanding by persons skilled in the art. In addition, the accompanying drawings and the following descriptions are provided for persons skilled in the art to fully understand this application and are not intended to limit the subject matter recorded in the claims.

"Ranges" disclosed in this application are defined in the form of lower and upper limits. A given range is defined by one lower limit and one upper limit selected, where the selected lower and upper limits define boundaries of that particular range. Ranges defined in this method may or may not include end values, and any combinations may be used, meaning any lower limit may be combined with any upper limit to form a range. For example, if ranges of 60-120 and 80-110 are provided for a specific parameter, it is understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-5. In this application, unless otherwise specified, a value range of "a-b" is a short representation of any combinations of real numbers between a and b, where both a and b are real numbers. For example, a value range of "0-5" means that all real numbers in the range of "0-5" are listed herein, and "0-5" is just an abbreviated representation of a combination of these numbers. In addition, when a parameter is expressed as an integer greater than or equal to 2, it is equivalent to disclosure that the parameter is, for example, an integer among 2, 3, 4, 5, 6, 7, 8, 9, 10, 11, 12, and so on.

Unless otherwise specified, all the embodiments and optional embodiments of this application can be combined with each other to form new technical solutions.

Unless otherwise specified, all the technical features and optional technical features of this application can be combined with each other to form new technical solutions.

Unless otherwise specified, all the steps in this application can be performed in the order described or in random order, preferably, in the order described. For example, a method including steps (a) and (b) indicates that the method may include steps (a) and (b) performed in order or may include steps (b) and (a) performed in order. For example, the foregoing method may further include step (c), which indicates that step (c) may be added to the method in any order, for example, the method may include steps (a), (b), and (c), steps (a), (c), and (b), steps (c), (a), and (b), or the like.

Unless otherwise specified, "include" and "contain" mentioned in this application are inclusive or may be exclusive. For example, "include" and "contain" can mean that other unlisted components may also be included or contained, or only listed components are included or contained.

Unless otherwise specified, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

An ether solvent is widely used in the field of sodium-ion batteries due to its good compatibility with alkali metal negative electrodes. However, the low oxidative stability of the ether solvent limits its application to positive electrode active materials, especially, the ether solvent cannot be collocated with a layered oxide positive electrode active material with a high energy density and high operating potential.

### [Electrolyte for sodium secondary battery]

In view of this, this application provides an electrolyte for sodium secondary battery, where the electrolyte for sodium secondary battery includes a sodium salt, an ether solvent, and a fluoroether solvent.

In this specification, "sodium secondary battery" refers to a secondary battery that uses sodium ions as charge carriers. A negative electrode active material of the sodium secondary battery includes a carbon-based material, a titanium-based material, an alloy material, a transition metal oxide, a transition metal selenide, and sodium metal. A secondary battery with a negative electrode active material including sodium metal is referred to as a sodium metal battery.

In this specification, "ether solvent" refers to a solvent whose molecules are ether compounds, and the ether solvent molecules contain no fluorine element.

In this specification, "fluoroether solvent" refers to a solvent of an ether compound containing fluorine element. In some embodiments, the fluoroether solvent is obtained by directly modifying the ether solvent molecules with fluorine substitution.

The fluoroether solvent has a high absolute value of a highest occupied molecular orbital (HOMO). The fluoroether solvent and the ether solvent added together in the electrolyte can broaden an electrochemical stability window of the electrolyte with the ether solvent, thereby enhancing the tolerance of the electrolyte to a high operating potential at a positive electrode, improving the thermal stability of the fluoroether solvent, and reducing the problems of high reactivity of the fluoroether solvent, a large amount of gas produced at a metal negative electrode, and poor cycling stability.

In some embodiments, a first solvation shell of the sodium salt includes ether solvent molecules and fluoroether solvent molecules.

In an electrolyte system of a secondary battery, cations in a sodium salt form a solvation structure through interactions with solvent molecules. The solvation structure typically includes a first solvation shell in which strong interactions are present between the cations and solvent molecules and a second solvation shell in which weak interactions are present between the cations and solvent molecules. The strong interactions and close connection between the cations and solvent molecules in the first solvation shell cause the cations to move along with the first solvation shell rather than migrate independently.

The composition of the first solvation shell can be characterized by Raman or infrared spectroscopy. Raman spectrum characterization on the electrolyte indicates that compared with an electrolyte including only the fluoroether solvent and an electrolyte including only the ether solvent and sodium salt, an electrolyte including a cosolvent formed by the ether solvent and the fluoroether solvent exhibits a red shift and/or an increase in a corresponding convolution peak area in the Raman characteristic peaks of 800 cm⁻¹ to 900 cm⁻¹.

In some embodiments, at 25°C, the solubility of sodium hexafluorophosphate in the fluoroether solvent is greater than 16 g. In some embodiments, at 25°C, the solubility of sodium bis(fluorosulfonyl)imide in the fluoroether diluent is greater than 40 g. The fluoroether solvent capable of participating in the first solvation shell has strong interactions with the sodium salt, so that the sodium salt has a high solubility in the corresponding fluoroether solvent.

The fluoroether solvent in the electrolyte of this application is not an inert fluoroether solvent with high steric hindrance, but participates in forming the first solvation shell together with the ether solvent molecules in the electrolyte. The fluoroether solvent and the ether solvent used together can effectively broaden the electrochemical stability window of the electrolyte with the ether solvent, thereby enhancing the tolerance of the electrolyte to the high operating potential at the positive electrode, improving the thermal stability of the fluoroether solvent, and reducing the problems of high reactivity of the fluoroether solvent, the large amount of gas produced at the metal negative electrode, and poor cycling stability.

In some embodiments, the ether solvent includes a compound represented by formula I, a compound represented by formula II, or a crown ether, 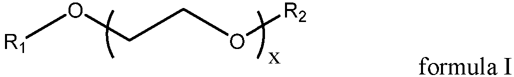 and 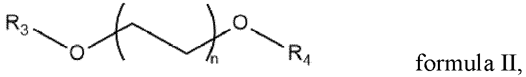 where R₁, R₂, R₃, and R₄ are each independently selected from hydrogen and unsubstituted C₁-C₆ alkyl; R₁ and R₂ optionally form a cyclic structure together with oxygen connected thereto; x is an arbitrary integer from 0 to 5; R₃ and R₄ optionally form a cyclic structure together with oxygen connected thereto; and n is an arbitrary integer from 1 to 5.

In some embodiments, x is optionally 0, 1, 2, 3, 4, or 5.

In some embodiments, n is optionally 1, 2, 3, 4, or 5.

In this specification, the term "C₁-C₆ alkyl" refers to a straight-chain or branched-chain hydrocarbon chain group including only carbon and hydrogen atoms, where the group has no unsaturation, has one to six carbon atoms, and is attached to the rest of a molecule through a single bond.

In this specification, the term "unsubstituted" means that hydrogen atoms of this compound or chemical part are not substituted with any atoms or substituents.

In this specification, the term "cyclic structure" refers to a structure in which atoms in a molecule are arranged in a ring. The cyclic structure is optionally a saturated heterocycle or an unsaturated heterocycle. The number of rings in the cyclic structure is not limited. For example, the cyclic structure may be a 3-membered ring, 4-membered ring, a 5-membered ring, a 6-membered ring, a 7-membered ring, a 12-membered ring, a 15-membered ring, or an 18-membered ring. For example, when the cyclic structure is formed by formula I, the cyclic structure includes but is not limited to 1,3-dioxolane, tetrahydrofuran, ethylene glycol diglycidyl ether, 1,4-butanediol diglycidyl ether, 1,2,3,4-diepoxybutane, methyl tetrahydrofuran, and 1,4-dioxane.

In this specification, the term "crown ether" refers to a macrocyclic polyether containing multiple -oxygen-methylene-structural units in a molecule. For example, the crown ether includes but is not limited to 15-crown-5 and 18-crown-6.

In some embodiments, the ether solvent includes one or more of ethylene glycol dimethyl ether (DME), diethylene glycol dimethyl ether (DEGDME), triethylene glycol dimethyl ether (TRGDME), tetraethylene glycol dimethyl ether (TEGDME), ethylene glycol diethyl ether (DEE), diethylene glycol diethyl ether (DEGDEE), diisopropyl ether (DIE), dibutyl ether (DBE), diethylene glycol dibutyl ether (DEGDBE), 1,4-dimethoxybutane (DMB), 1,4-diethoxybutane (DEB), 1,3-dioxolane (DOL), tetrahydrofuran (THF), 15-crown-5, 12-crown-4, and 18-crown-6; and optionally, the ether solvent includes one or more of ethylene glycol dimethyl ether, ethylene glycol diethyl ether, and 1,3-dioxolane.

In an electrolyte system of the sodium secondary battery, the ether solvent molecules can form a cosolvent structure with the fluoroether solvent molecules and sodium ions. The ether solvent molecules in the co-solvation structure can reduce the contact between the fluoroether solvent molecules and sodium metal at an electrode/electrolyte double layer interface, preventing the sodium metal from undergoing direct chemical reactions with the electrolyte, thereby ensuring that the electrolyte can withstand a high voltage and enhancing the chemical stability of the fluoroether solvent molecules to the sodium metal. In addition, the ether solvent is introduced into the fluoroether solvent, so that the solubility of the sodium salt in the electrolyte is increased, and the electrolyte can have a high concentration.

As compared with other solvents, a battery using ethylene glycol dimethyl ether, ethylene glycol diethyl ether, or 1,3-dioxopentane as the ether solvent exhibits higher room-temperature/high-temperature cycling performance and a smaller amount of gas produced at room temperature/high temperature.

In some embodiments, the fluoroether solvent includes a compound represented by formula III, 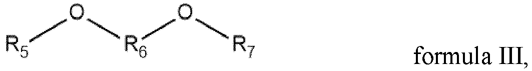 where R₅, R₆, and R₇ are each independently selected from hydrogen, unsubstituted C₁-C₆ alkyl, or C₁-C₆ alkyl substituted with fluorine or hydroxyl; at least one of R₅, R₆, and R₇ includes fluorine; and R₅ and R₇ optionally form a cyclic structure together with oxygen connected thereto and R₆ connected to oxygen.

For example, the cyclic structure formed by formula III includes but is not limited to, 2,2-bis(trifluoromethyl)-1,3-dioxolane and perfluorotetrahydrofuran.

In some embodiments, the fluoroether solvent includes one or more selected from 2,2,3,3-tetrafluoro-1,4-dimethoxybutane (FDMB, 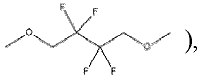 2-(2-ethoxyethoxy)-1,1,1-trifluoroethane (F3DEE, 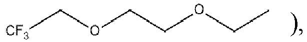 1,2-bis(2,2-difluoroethoxy)ethane (F4DEE, 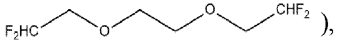 2-(2-(2,2-difluoroethoxy)ethoxy)-1,1,1-trifluoroethane (F5DEE, 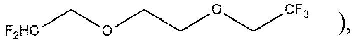 1,2-bis(2,2,2-trifluoroethoxy)ethane (F6DEE, 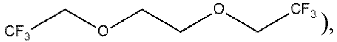 1,1,1,3,3,3-hexafluoroisopropyl methyl ether (HME), 2,2,2-trifluoroethyl methyl ether-1,1,2,3,3,3-hexafluoropropyl ether (THE), 2,2-bis(trifluoromethyl)-1,3-dioxolane (TFDOL), 2,2-dimethoxy-4-(trifluoromethyl)-1,3-dioxolane (DTDOL), 2-ethoxy-4-(trifluoromethyl)-1,3-dioxolane (ETDOL), and perfluorotetrahydrofuran (PFTHF); and optionally, the fluoroether solvent includes one or more of 2,2,3,3-tetrafluoro-1,4-dimethoxybutane, 2-(2-ethoxyethoxy)-1,1,1-trifluoroethane, 1,2-bis(2,2,2-trifluoroethoxy)ethane, 2,2-bis(trifluoromethyl)-1,3-dioxolane, and 2,2-dimethoxy-4-(trifluoromethyl)-1,3-dioxolane.

The fluoroether solvent of this application has a higher absolute value of the highest occupied molecular orbital (HOMO) than the ether solvent before fluorine substitution, thereby broadening an electrochemical stability window of a corresponding electrolyte after an electrolytic salt is dissolved, enhancing the electrochemical stability of the electrolyte, allowing the electrolyte to be collocated with a positive electrode active material with a higher potential, and increasing the operating voltage of the secondary battery.

When 2,2,3,3-tetrafluoro-1,4-dimethoxybutane, 2-(2-ethoxyethoxy)-1,1,1-trifluoroethane, 1,2-bis(2,2,2-trifluoroethoxy)ethane, 2,2-bis(trifluoromethyl)-1,3-dioxolane, or 2,2-dimethoxy-4-(trifluoromethyl)-1,3-dioxolane is used as the fluoroether solvent, the fluoroether solvent and the ether solvent have a better synergistic effect, so that the electrochemical performance and safety performance of the battery at room temperature/high temperature are improved.

In some embodiments, based on a total volume of the electrolyte, a volume ratio of the ether solvent to the fluoroether solvent is 1:9 to 9:1, optionally 1:1 to 9:1 or 3:2 to 4:1.

In some embodiments, based on the total volume of the electrolyte, an upper limit or lower limit of the volume ratio of the ether solvent to the fluoroether solvent is optionally 1:9, 1.5:9, 2:9, 2.5:9, 3:9, 3.5:9, 4:9, 4.5:9, 5:9, 5.5:9, 6:9, 6.5:9, 7:9, 7.5:9, 8:9, 8.5:9, 1:1, 1.5:1, 2:1, 2.5:1, 3:1, 3.5:1, 4:1, 4.5:1, 5:1, 5.5:1, 6:1, 6.5:1, 7:1, 7.5:1, 8:1, 8.5:1, or 9:1. In some embodiments, based on the total volume of the electrolyte, the volume ratio of the ether solvent to the fluoroether solvent is optionally 1:1 to 9:1 or 3:2 to 4:1.

When based on the total volume of the electrolyte, the volume ratio of the ether solvent to the fluoroether solvent is 1:9 to 9:1, the ether solvent molecules can form a cosolvent structure with the fluoroether solvent molecules and cations, thereby enhancing the tolerance of the ether solvent to a high voltage at the positive electrode, and improving the cycling stability and storage stability of a battery with the fluoroether solvent.

The fluoroether solvent has low thermal stability and high reactivity with sodium metal. However, this applicant has unexpectedly found that when based on the total volume of the electrolyte, the volume ratio of the ether solvent to the fluoroether solvent is 1:1 to 9:1, the fluoroether solvent added enhances the electrochemical window stability of the ether solvent and can also improve the cycling performance of a battery with the ether solvent, reduce the amount of gas produced in the battery, and improve the storage performance of the battery. The fluoroether solvent in this application is different from inert fluoroether solvents and participates in the first solvation shell to form a synergistic effect with the ether solvent, so as to jointly reduce the amount of gas produced in the battery and improve the cycling performance and storage performance of the battery. When based on the total volume of the electrolyte, the volume ratio of the ether solvent to the fluoroether solvent is 3:2 to 4:1, the battery with the ether solvent has further improved cycling performance and further reduced amount of gas produced.

In some embodiments, the electrolyte includes a sodium salt, where the sodium salt includes sodium nitrate (NaNO₃), sodium perchlorate (NaClO₄), sodium hexafluorophosphate (NaPF₆), sodium tetrafluoroborate (NaBF₄), sodium tetrafluoroyttrate (NaYF₆), sodium hexafluoroarsenate (NaAsF₆), sodium acetate (CH₃COONa), sodium trifluoroacetate (CF₃COONa), sodium bis(oxalato)borate (NaBOB), sodium difluoro(oxalato)borate (NaDFOB), sodium tetraphenylborate (NaB(C₆H₅)₄), sodium trifluoromethanesulfonate (NaOTf), sodium bis(fluorosulfonyl)imide (NaFSI), sodium bis(trifluoromethanesulfonyl)imide (NaTFSI), and sodium (perfluorobutylsulfonyl)imide (NaFNFSI).

The electrolyte provided in this application is suitable for different types of sodium salts. Different types of sodium salts can cooperate with the electrolyte of this application to improve the first solvation shell, thereby improving the cycling performance of the battery and reducing the amount of gas produced in the battery.

In some embodiments, based on a total mass of the electrolyte, a mass percentage of the sodium salt is 2% to 70%, optionally 30% to 60%.

In some embodiments, based on the total mass of the electrolyte, a mass percentage of sodium hexafluorophosphate is 2% to 30%.

In some embodiments, based on the total mass of the electrolyte, a mass percentage of sodium bis(fluorosulfonyl)imide or sodium bis(trifluoromethanesulfonyl)imide is 2% to 70%.

In some embodiments, based on the total mass of the electrolyte, a mass percentage of the sodium salt is 2%, 5%, 10%, 15%, 20%, 25%, 30%, 35%, 40%, 45%, 50%, 55%, 60%, 65%, or 70%.

When based on the total mass of the electrolyte, the mass percentage of the sodium salt is 2% to 70%, the electrolyte provided in this application can effectively broaden the electrochemical stability window of the electrolyte with the ether solvent, thereby enhancing the tolerance of the electrolyte to the high operating potential at the positive electrode, improving the thermal stability of the fluoroether solvent, and reducing the problems of high reactivity of the fluoroether solvent, the large amount of gas produced at the metal negative electrode, and poor cycling stability.

When based on the total mass of the electrolyte, the mass percentage of the sodium salt is 30% to 60%, the electrolyte of this application and the sodium salt with a high concentration further form a synergistic effect to adjust a solvation structure of the sodium salt with the high concentration, further improving the cycling performance, storage performance, and high-temperature performance of the battery based on high cycling performance of the battery due to the high concentration.

### [Sodium secondary battery]

In some embodiments, the sodium secondary battery includes the foregoing electrolyte.

In some embodiments, the sodium secondary battery is a sodium metal battery.

The sodium metal battery refers to a battery with a negative electrode containing sodium metal.

In some embodiments, the sodium secondary battery is a sodium secondary battery with no negative electrode. The sodium secondary battery with no negative electrode uses no negative electrode active material and just uses a negative electrode current collector as a negative electrode. During an initial charging process, sodium is plated on the negative electrode and returns to a positive electrode during charging, thereby achieving a charge and discharge cycle. Since the sodium secondary battery with no negative electrode contains no negative electrode material and just uses the negative electrode current collector, the sodium secondary battery with no negative electrode can effectively improve the manufacturing efficiency of the battery and reduce the manufacturing costs.

In some embodiments, a CB value of the sodium secondary battery with no negative electrode is less than or equal to 0.1. The CB value is obtained by dividing a capacity per unit area of a negative electrode plate by a capacity per unit area of a positive electrode plate in the sodium secondary battery. Since the sodium secondary battery with no negative electrode contains no negative electrode active material, the negative electrode plate has a small capacity per unit area, and the CB value of the sodium secondary battery with no negative electrode is less than or equal to 0.1.

Although the fluoroether solvent can broaden the electrochemical stability window on a positive electrode side of the sodium secondary battery with no negative electrode, the fluoroether solvent causes severe side reactions and reduces the overall storage performance of the battery. In this application, the co-solvation structure formed by the ether solvent and the fluoroether solvent ensures that the electrolyte can withstand a high voltage and enhances the chemical stability of fluoroether solvent molecules to sodium metal deposited at the negative electrode, thereby significantly improving the cycling performance and storage stability of the sodium secondary battery with no negative electrode.

In some embodiments, the sodium secondary battery includes a positive electrode plate, where the positive electrode plate includes a positive electrode active material, and the positive electrode active material includes one or more of a Prussian blue compound, a polyanionic compound, and a layered oxide.

In some embodiments, the layered oxide is optionally a layered transition metal oxide. A transition metal in the layered transition metal oxide may be at least one of Mn, Fe, Ni, Co, Cr, Cu, Ti, Zn, V, Zr, and Ce. Optionally, the layered transition metal oxide is, for example, NaₓMO₂, where M is one or more of Ti, V, Mn, Co, Ni, Fe, Cr, and Cu, and 0 < x ≤ 1.

The polyanionic compound may be a type of compound having metal ions, transition metal ions, and tetrahedral (YO₄)ⁿ⁻ anionic units. The metal ions are optionally one of sodium ions, lithium ions, potassium ions, and zinc ions; the transition metal is optionally at least one of Mn, Fe, Ni, Co, Cr, Cu, Ti, Zn, V, Zr, and Ce; Y is optionally at least one of P, S, and Si; and n represents the valence state of (YO₄)ⁿ⁻.

The Prussian blue compound may be a type of compound having sodium ions, transition metal ions, and cyanogen ions (CN-). The transition metal may be at least one of Mn, Fe, Ni, Co, Cr, Cu, Ti, Zn, V, Zr, and Ce. The Prussian blue compound is, for example, NaₐMe_{b}Me'_{c}(CN)₆, where Me and Me' are each independently at least one of Ni, Cu, Fe, Mn, Co, and Zn, 0 < a ≤ 2, 0 < b < 1, and 0 < c < 1.

In some embodiments, the positive electrode active material includes one or more of NaNi_{1/3}Fe_{1/3}Mn_{1/3}O₂, Na(Cu_{1/9}Ni_{2/9}Fe_{1/3}Mn_{1/3})O₂, Na_{2/3}Ni_{1/6}Mn_{2/3}Cu_{1/9}Mg_{1/18}O₂, Na₄Fe₃(PO₄)₂P₂O₇, NaFePO₄, Na₃V₂(PO₄)₃, Na_{1.9}CoFe(CN)₆, Na₂NiFe(CN)₆, and NaMnFe(CN)₆.

The layered oxide has a high energy density, but when the layered oxide is collocated with the ether solvent of the secondary battery with no negative electrode, the layered oxide exhibits low coulombic efficiency and poor cycling performance. The electrolyte provided in this application is collocated with the layered oxide, so that the cycling performance and storage stability of the battery are effectively improved.

In some embodiments, a surface of a particle of the positive electrode active material is provided with a coating layer, where the coating layer includes one or more of a carbon material, polyaniline (PANI), polypyrrole (PPy), poly(3,4-ethylenedioxythiophene) (PEDOT), aluminum oxide (Al₂O₃), zinc oxide (ZnO), titanium oxide (TiO₂), zirconium oxide (ZrO₂), magnesium oxide (MgO), silicon oxide (SiO₂), lanthanum oxide (La₂O₃), sodium fluoride (NaF), lithium fluoride (LiF), and aluminum fluoride (AlF₃). In some embodiments, the carbon material is amorphous carbon, graphite, or graphene.

The coating of the coating layer can effectively enhance the stability of the positive electrode active material, reduce metal dissolution and particle fracture of the positive electrode active material, especially the layered oxide, during cycling, and effectively improve the cycling performance and storage stability of the battery.

In some embodiments, a thickness of the coating layer is 2 nm to 1000 nm, optionally 10 nm to 100 nm.

The coating layer with an appropriate thickness can achieve an effective improvement effect, avoiding excessively high sheet resistance of the positive electrode and battery performance degradation due to the excessive thickness of the coating layer.

In some embodiments, the sodium secondary battery includes a negative electrode plate, where the negative electrode plate includes a negative electrode current collector and a primer layer provided on at least one side of the negative electrode current collector, and the primer layer includes one or more of carbon nanotubes, graphite, graphene, silver-carbon composite nanoparticles, and tin-carbon composite nanoparticles.

In some embodiments, a surface density of the primer layer is 2 g/m² to 50 g/m².

In some embodiments, a thickness of the primer layer is 1 µm to 100 µm.

The primer layer within the above range can effectively guide the deposition of sodium at the negative electrode of the secondary battery with no negative electrode, reduce the formation of sodium dendrites at the negative electrode, and improve the uniformity of sodium metal deposition. In addition, the primer layer with an appropriate surface density and thickness can really make the absence of the negative electrode possible, improving the energy density and safety performance of the battery.

In some embodiments, the negative electrode current collector of the sodium secondary battery includes at least one of a metal foil, a metal foam current collector, a metal mesh current collector, a carbon felt current collector, a carbon cloth current collector, a carbon paper current collector, and a composite current collector.

In some embodiments, the metal foil is optionally a copper foil, an aluminum foil, a stainless steel foil, or a titanium foil; and the metal foam current collector is optionally copper foam, aluminum foam, or nickel foam. The metal mesh current collector is optionally a copper mesh, an aluminum mesh, or a stainless steel mesh. The composite current collector includes a current collector with a primer layer or a current collector with a polymer base film. The composite current collector may have a "sandwich" structure, with a polymer base film in the middle and metal foil on two sides. The composite current collector may alternatively be a current collector with metal foil on one side of a polymer base film. The polymer base film is optionally one of polyamide, polyethylene terephthalate, polyimide, polyethylene, polypropylene, polystyrene, polyvinyl chloride, acrylonitrile-butadiene-styrene copolymer, polybutylene terephthalate, poly(p-phenylene terephthalamide), polypropylene, polyoxymethylene, epoxy resin, phenolic resin, polytetrafluoroethylene, polyvinylidene fluoride, silicone rubber, and polycarbonate. In some embodiments, the sodium secondary battery may include an outer package. The outer package may be used for packaging an electrode assembly and an electrolyte.

In some embodiments, the outer package of the sodium secondary battery may be a hard shell, for example, a hard plastic shell, an aluminum shell, or a steel shell. The outer package of the sodium secondary battery may alternatively be a soft pack, for example, a soft pouch. A material of the soft pack may be plastic. As the plastic, polypropylene, polybutylene terephthalate, and polybutylene succinate may be listed.

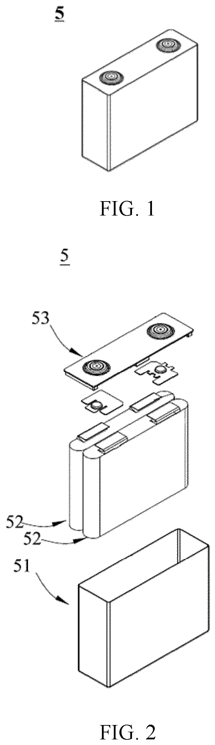

This application does not impose special limitations on the shape of the sodium secondary battery, and the secondary battery may be cylindrical, rectangular, or of any other shapes. For example, FIG. 1 shows a sodium secondary battery 5 of a rectangular structure as an example.

In some embodiments, referring to FIG. 2, the outer package may include a housing 51 and a cover plate 53. The housing 51 may include a base plate and side plates connected to the base plate, and the base plate and the side plates enclose an accommodating cavity. The housing 51 has an opening communicating with the accommodating cavity, and the cover plate 53 can cover the opening to close the accommodating cavity. A positive electrode plate, a negative electrode plate, and a separator may be made into an electrode assembly 52 through winding or lamination. The electrode assembly 52 is packaged in the accommodating cavity. The electrolyte infiltrates the electrode assembly 52. There may be one or more electrode assemblies 52 in the sodium secondary battery 5, and persons skilled in the art may make choices based on specific actual requirements.

In some embodiments, sodium secondary batteries may be assembled into a battery module, and the battery module may include one or more sodium secondary batteries. The specific quantity may be chosen by persons skilled in the art based on use and capacity of the battery module.

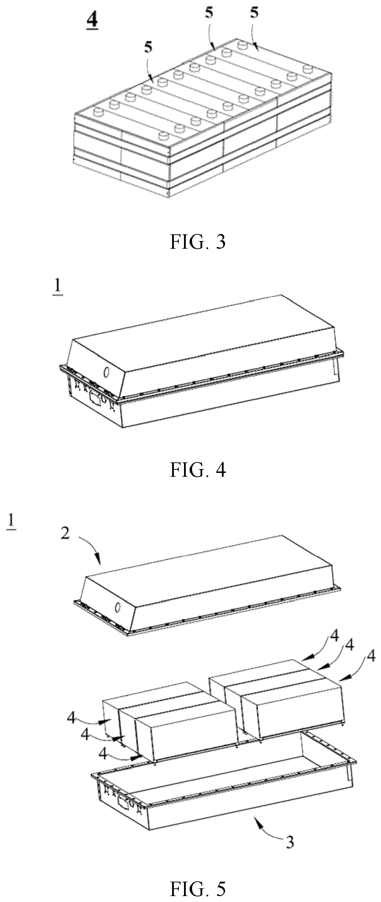

FIG. 3 shows a battery module 4 as an example. Referring to FIG. 3, in the battery module 4, a plurality of sodium secondary batteries 5 may be sequentially arranged along a length direction of the battery module 4. Certainly, the sodium secondary batteries may alternatively be arranged in any other manners. Further, the plurality of sodium secondary batteries 5 may be fixed by fasteners.

Optionally, the battery module 4 may further include an enclosure with an accommodating space, and the plurality of sodium secondary batteries 5 are accommodated in the accommodating space.

In some embodiments, the battery module may be further assembled into a battery pack, and the battery pack may include one or more battery modules. The specific quantity may be chosen by persons skilled in the art based on use and capacity of the battery pack.

FIG. 4 and FIG. 5 show a battery pack 1 as an example. Referring to FIG. 4 and FIG. 5, the battery pack 1 may include a battery box and a plurality of battery modules 4 arranged in the battery box. The battery box includes an upper box body 2 and a lower box body 3. The upper box body 2 can be engaged with the lower box body 3 to form an enclosed space for accommodating the battery modules 4. The plurality of battery modules 4 may be arranged in the battery box in any manner.

In addition, this application further provides an electric apparatus. The electric apparatus includes at least one of the sodium secondary battery, the battery module, or the battery pack provided in this application. The sodium secondary battery, the battery module, or the battery pack may be used as a power source for the electric apparatus, or an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, and the like, but is not limited thereto.

For the electric apparatus, a sodium secondary battery, a battery module, or a battery pack may be selected according to requirements for using the electric apparatus.

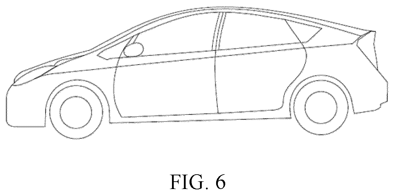

FIG. 6 shows an electric apparatus as an example. This electric apparatus is a battery electric vehicle, a hybrid electric vehicle, a plug-in hybrid electric vehicle, or the like. To satisfy requirements of the electric apparatus for high power and high energy density of a sodium secondary battery, a battery pack or a battery module may be used.

In another example, the apparatus may be a mobile phone, a tablet computer, a notebook computer, or the like. Such apparatus is generally required to be light and thin and may use a sodium secondary battery as its power source.

### Examples

The following describes examples of this application. The examples described below are illustrative and only used for explaining this application, and cannot be construed as limitations on this application. Examples whose technical solutions or conditions are not specified are made in accordance with technical solutions or conditions described in literature in the field or made in accordance with product instructions. The reagents or instruments used are all conventional products that are commercially available if no manufacturer is indicated.

### I. Preparation method

### Example 1

### 1. Preparation of positive electrode plate

A positive electrode active material carbon-coated sodium iron pyrophosphate (Na₄Fe₃(PO₄)₂P₂O₇/C), a binder polyvinylidene fluoride (PVDF), and a conductive agent conductive carbon black (Super P) were mixed well at a mass ratio of 96%:2%:2% in an N-methylpyrrolidone (NMP) solvent to prepare a positive electrode slurry. The positive electrode slurry was applied on a surface of an aluminum foil using an extrusion coater according to the requirement of the mass per unit area of the positive electrode active material, and then drying was performed. An electrode plate coated with the positive electrode slurry was subjected to cold pressing at a designed pressing density of 2.5 g/cm³ using a cold press to obtain a final positive electrode plate.

### 2. Preparation of negative electrode plate

Carbon nanotubes and sodium carboxymethyl cellulose were added to water at a mass ratio of 1:2 and stirred to form a uniform slurry. The slurry was applied on a negative electrode current collector, dried, and cut to obtain a negative electrode plate with no negative electrode structure, where a surface density of a primer layer was 10 g/m².

### 3. Separator

A polyethylene film (PE separator) was used as a separator.

### 4. Preparation of electrolyte

In an argon atmosphere glove box (H₂O < 0.1 ppm, O₂ < 0.1 ppm), DME (ethylene glycol dimethyl ether) and FDMB (2,2,3,3-tetrafluoro-1,4-dimethoxybutane) were mixed at a volume ratio of 3:1, and sodium hexafluorophosphate was dissolved in the mixture solvent so that a mass of sodium hexafluorophosphate accounted for 20wt% of a total mass of an electrolyte, to obtain an electrolyte of Example 1.

### 5. Preparation of battery

The positive electrode plate, the separator, and the negative electrode plate were sequentially stacked so that the separator was located between the positive and negative electrode plates for separation, the foregoing electrolyte was added, and a button battery was assembled.

In Examples 2 to 20, components of electrolytes were adjusted, and specific parameters were shown in Table 1. In Example 20, the electrolyte included two sodium salts, where a mass percentage of sodium trifluoromethanesulfonate was 30%, and a mass percentage of sodium hexafluorophosphate was 20%. In Example 21, the electrolyte included two sodium salts, where a mass percentage of sodium trifluoromethanesulfonate was 40%, and a mass percentage of sodium hexafluorophosphate was 30%.

In Examples 21 and 22, the positive electrode active materials were Na[Cu_{1/9}Ni_{2/9}Fe_{1/3}Mn_{1/3}]O₂ and ZrO₂-coated Na_{2/3}Ni_{1/6}Mn_{2/3}Cu_{1/9}Mg_{1/18}O₂ (with a thickness of a ZrO₂ coating layer being 30 nm), respectively. Specific parameters of other components were shown in Table 1.

In Comparative examples 1 to 10, electrolyte components or positive electrode active materials of the secondary batteries were adjusted, and the specific parameters were shown in Table 1. Preparation methods were basically the same as those of Example 1.

### II. Battery performance test

### (1) Test of electrochemical stability window

An electrochemical workstation was used to test the window of the electrolyte, with a test voltage range of 1.0 V to 5.0 V and a scanning speed of 0.1 mV/s. The electrochemical stability window of the electrolyte was determined based on a starting position of a peak potential in a CV curve. All cyclic voltammetry (CV) tests in the experiment were completed on the 1470 multi-channel electrochemical workstation of Solartron, UK.

### (2) Room-temperature/high-temperature cycling performance

At 25°C/60°C and normal pressure (0.1 MPa), the battery was charged at a constant current of 0.1C to a voltage of 4 V (at a layered oxide positive electrode) or 3.7 V (at a sodium iron pyrophosphate positive electrode), and then discharged at a constant current of 0.1C to a voltage of 3.0 V. This process was the first charge and discharge cycle. Then, the battery was charged at a constant current of 1C to a voltage of 4 V/3.7 V, and then discharged at a constant current of 1C to a voltage of 3.0 V. A first discharge capacity was denoted as 100%, and the number of cycles until the discharge capacity was 80% was recorded.

### (3) Room-temperature/high-temperature storage performance

At 25°C/60°C, the prepared full battery was left standing for 30 minutes, charged at a constant current of 0.1C to 4 V (at a layered oxide positive electrode) or 3.7 V (at a sodium iron pyrophosphate positive electrode), then charged at a constant voltage of 4 V/3.7 V to 0.01C, and then left standing for 5 minutes. The thickness of the full battery was measured. After the full battery had been stored at 25°C/60°C for 60 days, the thickness of the full battery was measured. A thickness swelling rate of the battery was calculated using the following formula: thickness swelling rate of the full battery = [(thickness after storage - thickness before storage)/thickness before storage] × 100%. The test processes in comparative examples and other examples were the same as above, and specific test results were shown in Table 2.

**Table 1**

| No. | Positive electrode active material | Sodium salt | Mass percentage | Solvent | | Ether: fluoroether (volume ratio) |
|---|---|---|---|---|---|---|
| | | | | Ether solvent | Fluoroether solvent | |
| Example 1 | Carbon-coated sodium iron pyrophosphate | Sodium hexafluorophosphate | 20% | DME | FDMB | 3:1 |
| Example 2 | Carbon-coated sodium iron pyrophosphate | Sodium hexafluorophosphate | 20% | DME | F3DEE | 3:1 |
| Example 3 | Carbon-coated sodium iron pyrophosphate | Sodium hexafluorophosphate | 20% | DME | F6DEE | 3:1 |
| Example 4 | Carbon-coated sodium iron pyrophosphate | Sodium hexafluorophosphate | 20% | DME | TFDOL | 3:1 |
| Example 5 | Carbon-coated sodium iron pyrophosphate | Sodium hexafluorophosphate | 20% | DME | DTDOL | 3:1 |
| Example 6 | Carbon-coated sodium iron pyrophosphate | Sodium hexafluorophosphate | 20% | DEE | FDMB | 3:1 |
| Example 7 | Carbon-coated sodium iron pyrophosphate | Sodium hexafluorophosphate | 20% | DOL | FDMB | 3:1 |
| Example 8 | Carbon-coated sodium iron pyrophosphate | Sodium hexafluorophosphate | 20% | DME | FDMB | 1:9 |
| Example 9 | Carbon-coated sodium iron pyrophosphate | Sodium hexafluorophosphate | 20% | DME | FDMB | 1:4 |
| Example 10 | Carbon-coated sodium iron pyrophosphate | Sodium hexafluorophosphate | 20% | DME | FDMB | 2:3 |
| Example 11 | Carbon-coated sodium iron pyrophosphate | Sodium hexafluorophosphate | 20% | DME | FDMB | 1:1 |
| Example 12 | Carbon-coated sodium iron pyrophosphate | Sodium hexafluorophosphate | 20% | DME | FDMB | 3:2 |
| Example 13 | Carbon-coated sodium iron pyrophosphate | Sodium hexafluorophosphate | 20% | DME | FDMB | 4:1 |
| Example 14 | Carbon-coated sodium iron pyrophosphate | Sodium hexafluorophosphate | 20% | DME | FDMB | 9:1 |
| Example 15 | Carbon-coated sodium iron pyrophosphate | Sodium hexafluorophosphate | 2% | DME | FDMB | 3:1 |
| Example 16 | Carbon-coated sodium iron pyrophosphate | Sodium hexafluorophosphate | 30% | DME | FDMB | 3:1 |
| Example 17 | Carbon-coated sodium iron pyrophosphate | Sodium bis(fluorosulfonyl)imide | 20% | DME | FDMB | 3:1 |
| Example 18 | Carbon-coated sodium iron pyrophosphate | Sodium trifluoromethanesulfonate | 50% | DME | FDMB | 3:1 |
| Example 19 | Carbon-coated sodium iron pyrophosphate | Sodium trifluoromethanesulfonate + sodium hexafluorophosphate (mass ratio of 3:2) | 50% | DME | FDMB | 3:1 |
| Example 20 | Carbon-coated sodium iron pyrophosphate | Sodium trifluoromethanesulfonate + sodium hexafluorophosphate (mass ratio of 4:3) | 70% | DME | FDMB | 3:1 |
| Example 21 | Na[Cu_{1/9}Ni_{2/9}Fe_{1/3}Mn_{1/3}]O₂ | Sodium hexafluorophosphate | 20% | DME | FDMB | 3:1 |
| Example 22 | ZrO₂-coated Na_{2/3}Ni_{1/6}Mn_{2/3}Cu_{1/9}Mg_{1/18}O₂ | Sodium hexafluorophosphate | 20% | DME | FDMB | 3:1 |
| Comparative example 1 | Carbon-coated sodium iron pyrophosphate | Sodium hexafluorophosphate | 20% | DME | / | / |
| Comparative Example 2 | Carbon-coated sodium iron pyrophosphate | Sodium hexafluorophosphate | 20% | / | FDMB | / |
| Comparative Example 3 | Carbon-coated sodium iron pyrophosphate | Sodium hexafluorophosphate | 30% | DME | / | / |
| Comparative example 4 | Carbon-coated sodium iron pyrophosphate | Sodium hexafluorophosphate | 30% | / | FDMB | / |
| Comparative example 5 | Carbon-coated sodium iron pyrophosphate | Sodium bis(fluorosulfonyl)imide | 20% | DME | / | / |
| Comparative example 6 | Carbon-coated sodium iron pyrophosphate | Sodium trifluoromethanesulfonate | 50% | DME | / | / |
| Comparative example 7 | Na[Cu_{1/9}Ni_{2/9}Fe_{1/3}Mn_{1/3}]O₂ | Sodium hexafluorophosphate | 20% | DME | / | / |
| Comparative example 8 | Na[Cu_{1/9}Ni_{2/9}Fe_{1/3}Mn_{1/3}]O₂ | Sodium hexafluorophosphate | 20% | / | FDMB | / |
| Comparative example 9 | ZrO₂-coated Na_{2/3}Ni_{1/6}Mn_{2/3}Cu_{1/9}Mg_{1/18}O₂ | Sodium hexafluorophosphate | 20% | DME | / | / |
| Comparative example 10 | ZrO₂-coated Na_{2/3}Ni_{1/6}Mn_{2/3}Cu_{1/9}Mg_{1/18}O₂ | Sodium hexafluorophosphate | 20% | / | FDMB | / |

**Table 2**

| No. | Electrochemical stability window width (V, 25°C) | Cycles to capacity retention rate of 80% (cycles) (at charge and discharge rate of 1C at 25°C) | Cycles to capacity retention rate of 80% (cycles) (at charge and discharge rate of 1C at 60°C) | Room-temperature storage swelling rate (%) (25°C) | High-temperature storage swelling rate (%) (60°C) |
|---|---|---|---|---|---|
| Example 1 | 4.6 | 2350 | 1500 | 12 | 19 |
| Example 2 | 4.6 | 2000 | 1150 | 15 | 24 |
| Example 3 | 4.7 | 2200 | 900 | 16 | 26 |
| Example 4 | 4.5 | 1800 | 750 | 19 | 28 |
| Example 5 | 4.7 | 1800 | 950 | 17 | 27 |
| Example 6 | 4.7 | 2000 | 1200 | 14 | 20 |
| Example 7 | 4.5 | 2250 | 850 | 14 | 27 |
| Example 8 | 4.9 | 1000 | 250 | 23 | 36 |
| Example 9 | 4.8 | 1350 | 300 | 20 | 33 |
| Example 10 | 4.8 | 1500 | 350 | 20 | 30 |
| Example 11 | 4.7 | 2000 | 750 | 17 | 26 |
| Example 12 | 4.7 | 2100 | 1000 | 15 | 23 |
| Example 13 | 4.5 | 2300 | 950 | 15 | 28 |
| Example 14 | 4.5 | 2350 | 600 | 14 | 31 |
| Example 15 | 4.5 | 2000 | 850 | 16 | 26 |
| Example 16 | 4.6 | 2500 | 1600 | 10 | 17 |
| Example 17 | 4.5 | 2000 | 750 | 19 | 28 |
| Example 18 | 4.7 | 2200 | 900 | 18 | 25 |
| Example 19 | 4.8 | 2850 | 1800 | 8 | 14 |
| Example 20 | 4.9 | 3000 | 2000 | 6 | 10 |
| Example 21 | 4.6 | 850 | 350 | 24 | 30 |
| Example 22 | 4.6 | 1000 | 450 | 21 | 28 |
| Comparative example 1 | 3.9 | 2000 | 500 | 18 | 33 |
| Comparative example 2 | 4.9 | 800 | 200 | 24 | 38 |
| Comparative example 3 | 3.9 | 2100 | 600 | 17 | 32 |
| Comparative example 4 | 4.9 | 800 | 250 | 22 | 35 |
| Comparative example 5 | 3.8 | 1500 | 250 | 19 | 34 |
| Comparative example 6 | 4.0 | 1650 | 400 | 19 | 30 |
| Comparative example 7 | 3.9 | 250 | 50 | 31 | 36 |
| Comparative example 8 | 4.9 | 350 | 50 | 30 | 43 |
| Comparative example 9 | 3.9 | 350 | 50 | 27 | 33 |
| Comparative example 10 | 4.9 | 500 | 50 | 29 | 39 |

It can be seen from Tables 1 and 2 that the comparison of Examples 1 to 14 and Comparative examples 1 and 2 indicates that the cosolvent electrolyte including the ether solvent and the fluoroether solvent is used, so that the battery has a wider electrochemical stability window than the battery with the electrolyte including only the ether solvent, and the battery has better cycling performance and storage performance than the battery with the electrolyte including only the fluoroether solvent.

It can be seen from Examples 1 to 5 that the collocation of FDMB, F3DEE, F6DEE, and the ether solvent can more effectively improve the cycling performance and gas production resistance of the battery.

It can be seen from Examples 1, 6, and 7 that the collocation of different ether solvents and fluoroether solvents is conducive to improving different performance of the battery, DEE is conducive to improving the high-temperature performance of the battery, and DOL is conducive to improving the room-temperature performance of the battery.

It can be seen from Examples 1 and 8 to 14 that when based on the total volume of the electrolyte, the volume ratio of the ether solvent to the fluoroether solvent is 1:1 to 9:1, the ether solvent and fluoroether solvent in the electrolyte exhibit an excellent synergistic effect. Compared with the battery with the electrolyte including only the ether solvent in Comparative example 1, the battery not only has a broadened electrochemical window but also exhibits better cycling performance and storage performance. When based on the total volume of the electrolyte, the volume ratio of the ether solvent to the fluoroether solvent is 3:2 to 4:1, the battery has a wide electrochemical window and exhibits more excellent cycling performance and storage performance.

It can be seen from Examples 1 and 17 to 20 that the electrolyte provided in this application is suitable for various different sodium salts, and the battery has a wide electrochemical window and exhibits excellent cycling performance and storage performance.

It can be seen from Examples 15 to 20 that when based on the total mass of the electrolyte, the mass percentage of the sodium salt is 2% to 70%, the battery exhibits a wide electrochemical window and excellent room-temperature and high-temperature cycling performance and low gas production performance.

In addition, it can be seen from Examples 1 and 15 to 20 that the cosolvent electrolyte including the ether solvent and the fluoroether solvent is also suitable for a high-concentration electrolyte, which can further improve the cycling performance of the battery with the high-concentration electrolyte and reduce the gas production performance of the battery. In Examples 19 and 20, two sodium salts including sodium trifluoromethanesulfonate and sodium hexafluorophosphate are added and further collocated with the cosolvent electrolyte to improve the overall performance of the battery.

It can be seen from the comparison of Examples 1, 21, and 22 and Comparative examples 7 to 10 that the electrolyte provided in this application is suitable for various positive electrode materials, and both polyanions and layered oxides can broaden the electrochemical stability window of the battery and effectively improve the cycling performance and storage stability of the battery, and especially, the cycling stability of the layered oxides at high voltages can be effectively improved.

It should be noted that this application is not limited to the foregoing embodiments. The foregoing embodiments are merely examples, and embodiments having substantially the same constructions and the same effects as the technical idea within the scope of the technical solutions of this application are all included in the technical scope of this application. In addition, without departing from the essence of this application, various modifications made to the embodiments that can be conceived by persons skilled in the art, and other manners constructed by combining some of the constituent elements in the embodiments are also included in the scope of this application.

## Claims

1. An electrolyte for sodium secondary battery, **characterized by** comprising a sodium salt, an ether solvent, and a fluoroether solvent.

2. The electrolyte according to claim 1, **characterized in that** a first solvation shell of the sodium salt comprises ether solvent molecules and fluoroether solvent molecules.

3. The electrolyte according to claim 1 or 2, **characterized in that** the ether solvent comprises a compound represented by formula I, a compound represented by formula II, or a crown ether, 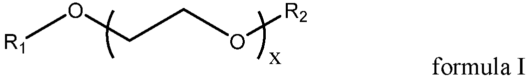 and 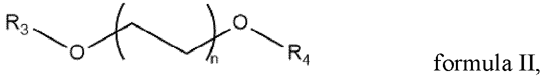 wherein R₁, R₂, R₃, and R₄ are each independently selected from hydrogen and unsubstituted C₁-C₆ alkyl; R₁ and R₂ optionally form a cyclic structure together with oxygen connected thereto; x is an arbitrary integer from 0 to 5; R₃ and R₄ optionally form a cyclic structure together with oxygen connected thereto; and n is an arbitrary integer from 1 to 5.

4. The electrolyte according to any one of claims 1 to 3, **characterized in that** the ether solvent comprises one or more of ethylene glycol dimethyl ether, diethylene glycol dimethyl ether, triethylene glycol dimethyl ether, tetraethylene glycol dimethyl ether, ethylene glycol diethyl ether, diethylene glycol diethyl ether, diisopropyl ether, dibutyl ether, diethylene glycol dibutyl ether, 1,4-dimethoxybutane, 1,4-diethoxybutane, 1,3-dioxolane, tetrahydrofuran, 15-crown-5, 12-crown-4, and 18-crown-6; and optionally, the ether solvent comprises one or more of ethylene glycol dimethyl ether, ethylene glycol diethyl ether, and 1,3-dioxolane.

5. The electrolyte according to any one of claims 1 to 4, **characterized in that** the fluoroether solvent comprises a compound represented by formula III, 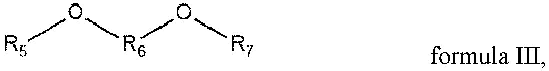 wherein R₅, R₆, and R₇ are each independently selected from hydrogen, unsubstituted C₁-C₆ alkyl, or C₁-C₆ alkyl substituted with fluorine or hydroxyl; at least one of R₅, R₆, and R₇ comprises fluorine; and R₅ and R₇ optionally form a cyclic structure together with oxygen connected thereto and R₆ connected to oxygen.

6. The electrolyte according to any one of claims 1 to 5, **characterized in that** the fluoroether solvent comprises one or more selected from 2,2,3,3-tetrafluoro-1,4-dimethoxybutane, 2-(2-ethoxyethoxy)-1,1,1-trifluoroethane, 1,2-bis(2,2-difluoroethoxy)ethane, 2-(2-(2,2-difluoroethoxy)ethoxy)-1,1,1-trifluoroethane, 1,2-bis(2,2,2-trifluoroethoxy)ethane, 1,1,1,3,3,3-hexafluoroisopropyl methyl ether, 2,2,2-trifluoroethyl methyl ether-1,1,2,3,3,3-hexafluoropropyl ether, 2,2-bis(trifluoromethyl)-1,3-dioxolane, 2,2-dimethoxy-4-(trifluoromethyl)-1,3-dioxolane, 2-ethoxy-4-(trifluoromethyl)-1,3-dioxolane, and perfluorotetrahydrofuran; and optionally, the fluoroether solvent comprises one or more of 2,2,3,3-tetrafluoro-1,4-dimethoxybutane, 2-(2-ethoxyethoxy)-1,1,1-trifluoroethane, 1,2-bis(2,2,2-trifluoroethoxy)ethane, 2,2-bis(trifluoromethyl)-1,3-dioxolane, and 2,2-dimethoxy-4-(trifluoromethyl)-1,3-dioxolane.

7. The electrolyte according to any one of claims 1 to 6, **characterized in that** based on a total volume of the electrolyte, a volume ratio of the ether solvent to the fluoroether solvent is 1:9 to 9:1, optionally 1:1 to 9:1 or 3:2 to 4:1.

8. The electrolyte according to any one of claims 1 to 7, **characterized in that** the sodium salt comprises one or more of sodium nitrate, sodium perchlorate, sodium hexafluorophosphate, sodium tetrafluoroborate, sodium tetrafluoroyttrate, sodium hexafluoroarsenate, sodium acetate, sodium trifluoroacetate, sodium bis(oxalato)borate, sodium difluoro(oxalato)borate, sodium tetraphenylborate, sodium trifluoromethanesulfonate, sodium bis(fluorosulfonyl)imide, sodium bis(trifluoromethanesulfonyl)imide, and sodium (perfluorobutylsulfonyl)imide.

9. The electrolyte according to any one of claims 1 to 8, **characterized in that** based on a total mass of the electrolyte, a mass percentage of the sodium salt is 2% to 70%, optionally 30% to 70%.

10. A sodium secondary battery, **characterized by** comprising the electrolyte according to any one of claims 1 to 9.

11. The sodium secondary battery according to claim 10, **characterized in that** the secondary battery is a sodium metal battery.

12. The sodium secondary battery according to claim 10 or 11, **characterized in that** the secondary battery is a sodium secondary battery with no negative electrode.

13. The sodium secondary battery according to any one of claims 10 to 12, **characterized in that** the sodium secondary battery comprises a positive electrode plate, wherein the positive electrode plate comprises a positive electrode active material, and the positive electrode active material comprises one or more of a Prussian blue compound, a polyanionic compound, and a layered oxide.

14. The sodium secondary battery according to claim 13, **characterized in that** a surface of a particle of the positive electrode active material is provided with a coating layer, wherein the coating layer comprises one or more of a carbon material, polyaniline, polypyrrole, poly(3,4-ethylenedioxythiophene), aluminum oxide, zinc oxide, titanium oxide, zirconium oxide, magnesium oxide, silicon oxide, lanthanum oxide, sodium fluoride, lithium fluoride, and aluminum fluoride.

15. The sodium secondary battery according to claim 14, **characterized in that** a thickness of the coating layer is 2 nm to 1000 nm, optionally 10 nm to 100 nm.

16. The sodium secondary battery according to any one of claims 10 to 15, **characterized in that** the secondary battery comprises a negative electrode plate, wherein the negative electrode plate comprises a negative electrode current collector and a primer layer provided on at least one side of the negative electrode current collector, and the primer layer comprises one or more of carbon nanotubes, graphite, graphene, silver-carbon composite nanoparticles, and tin-carbon composite nanoparticles.

17. The sodium secondary battery according to claim 16, **characterized in that** the negative electrode current collector comprises at least one of a metal foil, a metal foam current collector, a metal mesh current collector, a carbon felt current collector, a carbon cloth current collector, a carbon paper current collector, and a composite current collector.

18. The sodium secondary battery according to claim 16 or 17, **characterized in that** a surface density of the primer layer is 2 g/m² to 50 g/m².

19. The sodium secondary battery according to any one of claims 16 to 18, **characterized in that** a thickness of the primer layer is 1 µm to 100 µm.

20. A battery module, **characterized by** comprising the sodium secondary battery according to any one of claims 10 to 19.

21. A battery pack, **characterized by** comprising the sodium secondary battery according to any one of claims 10 to 19 or the battery module according to claim 20.

22. An electric apparatus, **characterized by** comprising at least one of the sodium secondary battery according to any one of claims 10 to 19, the battery module according to claim 20, and the battery pack according to claim 21.
